Europäisches Patentamt

European Patent Office

Office européen des brevets

(11) Veröffentlichungsnummer: **0 313 518 B1**

(12) **EUROPÄISCHE PATENTSCHRIFT**

(45) Veröffentlichungstag der Patentschrift: **12.01.94**

(51) Int. Cl.⁵: **G01S 17/08**, G01S 7/48, G01S 17/32

(21) Anmeldenummer: **88810712.5**

(22) Anmeldetag: **19.10.88**

(54) **Verfahren zur elektrooptischen Distanzmessung.**

(30) Priorität: **23.10.87 CH 4163/87**

(43) Veröffentlichungstag der Anmeldung:
**26.04.89 Patentblatt 89/17**

(45) Bekanntmachung des Hinweises auf die
Patenterteilung:
**12.01.94 Patentblatt 94/02**

(84) Benannte Vertragsstaaten:
**DE FR GB IT SE**

(56) Entgegenhaltungen:
EP-A- 0 205 406      DE-A- 2 605 798
FR-A- 1 469 533      US-A- 3 200 698
US-A- 3 424 531      US-A- 4 129 775

**PATENT ABSTRACTS OF JAPAN**, Band 10,
Nr. 106 (P-449)[2163], 22. April 1986;& JP-A-60
238 776 (TOSHIBA K.K.) 27-11-1985

(73) Patentinhaber: **Leica AG**

**CH-9435 Heerbrugg(CH)**

(72) Erfinder: **Meier, Dietrich**
**Leimenstrasse 682**
**CH-5015 Niedererlinsbach(CH)**

(74) Vertreter: **Stamer, Harald, Dipl.-Phys.**
**c/o Leica Industrieverwaltung GmbH,**
**Konzernstelle Patente + Marken,**
**Postfach 20 20**
**D-35530 Wetzlar (DE)**

## Beschreibung

Die Erfindung betrifft ein Verfahren zur elektrooptischen Distanzmessung unter Verwendung eines Distanzmessgerätes, in welchem ein elektromagnetischer Strahl erzeugt, mittels eines elektrooptischen Modulators ein erstes Mal moduliert und auf einen Zielgegenstand gerichtet wird und mit welchem am Zielgegenstand reflektierte Strahlanteile aufgenommen, erneut moduliert und in ihrer Stärke gemessen werden.

Elektrooptische Distanzmessgeräte unter Ausnutzung der Ausbreitungsgeschwindigkeit des Lichtes im Raum, bzw. in der Luft sind in verschiedenen Formen bekannt. In der Praxis am meisten durchgesetzt haben sich Geräte, bei denen die Helligkeit eines Lichtstrahles sinusförmig moduliert wird. Bei zweimaligem Durchlaufen der Messstrecke bis zu einem Reflektor und wieder zurück erfährt die Modulation eine Phasenverzögerung, die mit optischen und elektrischen Mitteln gemessen wird und distanzabhängig ist. Im Zuge der Entwicklung der elektrischen Zeitmesstechnik hat man auch schon die Laufzeit einzelner Lichtimpulse oder Blitze einmalig oder wiederholt zur Distanzbestimmung gemessen.

Weniger verbreitet sind Messgeräte, die nach der sogenannten Zahnradmethode (A.H.L. Fizeau, 1846) arbeiten. Dabei wurde ursprünglich ein Lichtstrahl durch ein Zahnrad periodisch unterbrochen, dann zu einem Reflektor gesendet und schliesslich wieder am gleichen Zahnrad ein zweites Mal periodisch unterbrochen. Aus der Drehzahl des Zahnrades im Falle einer Auslöschung des rückkehrenden Lichtstrahles lässt sich dessen Laufzeit durch Vergleich mit der Laufzeit eines Zahnradzahnes bis zur nächsten Zahnlücke bestimmen. Moderne Messgeräte nach der Zahnradmethode verwenden anstelle des Zahnrades elektrooptische Kristalle als Modulator (US-Patentschrift 3,424,531, P.L. Bender et al.). Dabei wird der Messstrahl nicht mehr periodisch unterbrochen, sondern die elliptische Polarisation wird periodisch verändert. Moduliert man im Kristall einen linear polarisierten Lichtstrahl mit bezüglich der Kristallachsen geeigneter Lage der Polarisationsebene mit einem Sinussignal von einigen 100 MHz und treffen reflektierte Strahlanteile beim zweiten Kristalldurchgang in umgekehrter Richtung die gleiche Modulationsphase an, wie beim ersten Durchgang, so erhält man die ursprüngliche zeitlich konstante Linearpolarisation wieder zurück und beobachtet an einem geeigneten Polarisations-Analysatorfilter Helligkeitsauslöschung. In diesem Fall befindet sich in jedem Moment gerade eine ganze Anzahl von Modulationswellenlängen auf der doppelten Messdistanz zwischen Modulatorkristall und Reflektor. Beobachtet man kein Helligkeitsminimum, so kann man ein solches herbeiführen, indem man die Messdistanz oder die Modulationswellenlänge ändert. Beides ist gemäss dem Stand der Technik bekannt (vgl. auch GB-Patentschrift 919,368, K.D. Froome et al.).

Bekannte Distanzmessgeräte mit elektrooptischen Kristallmodulatoren arbeiten mit einem oder mehreren Würfelecken-Reflektoren als Zielobjekt, welche einen auftreffenden Messstrahl weitgehend auf den Weg umlenken, auf dem er vom Distanzmessgerät her gekommen war. Dieser Weg schliesst auch den Modulationskristall ein, sodass eine weitgehende Rückmodulation möglich ist, die zur Beobachtung des oben genannten Helligkeitsminimums führt vgl. EP 0205406. Zu diesem Zweck müssen die Würfeleckenreflektoren eine hohe Präzision aufweisen und auch beibehalten, sie sind daher teuer und unhandlich. Versucht man, mit Distanzmessgeräten bekannter Art mit elektrooptischen Kristallmodulatoren auf natürliche Objekte oder Reflexfolien anstelle der Würfeleckenreflektoren zu messen, so zeigt sich, dass keines der genannten Helligkeitsminima mehr auftritt, also keine Messung möglich ist, obwohl genügend intensive Strahlanteile vom Zielgegenstand her aufgenommen werden.

Aufgabe der Erfindung ist es daher, ein Verfahren zur elektrooptischen Distanzmessung mit einem Distanzmessgerät mit einem Modulator nach der Zahnradmethode anzugeben, welches auch Messungen auf natürliche Objekte oder Reflexfolien usw. erlaubt.

Diese Aufgabe wird bei einem Verfahren der eingangs genannten Art dadurch gelöst, dass der modulierte elektromagnetische Strahl auf den Zielgegenstand fokussiert wird. Diese Lösung geht von der Erkenntnis aus, dass bei einem ausgedehnten Strahlfleck auf einem Zielgegenstand mit einer breiten Streucharakteristik zuviele zurückkommende Strahlanteile bei der Demodulation im Kristal neue und schräge Wege mit unterschiedlicher Modulationswirkung durchlaufen. In diesem Fall kann keine einheitliche Linearpolarisierung für ein Helligkeitsminimum erreicht werden. Arbeitet man hingegen infolge der Fokussierung mit einem sehr kleinen Strahlfleck, so gehen vom ursprünglichen Strahlweg weggestreute Strahlanteile einfach verloren, ohne im Messgerät das gesuchte Minimum zu verdecken.

Das genannte Lösungsverfahren ermöglicht nun, weitere zweckmässige Ausführungsformen, welche in den Patentansprüchen 2 bis 8 gekennzeichnet sind.

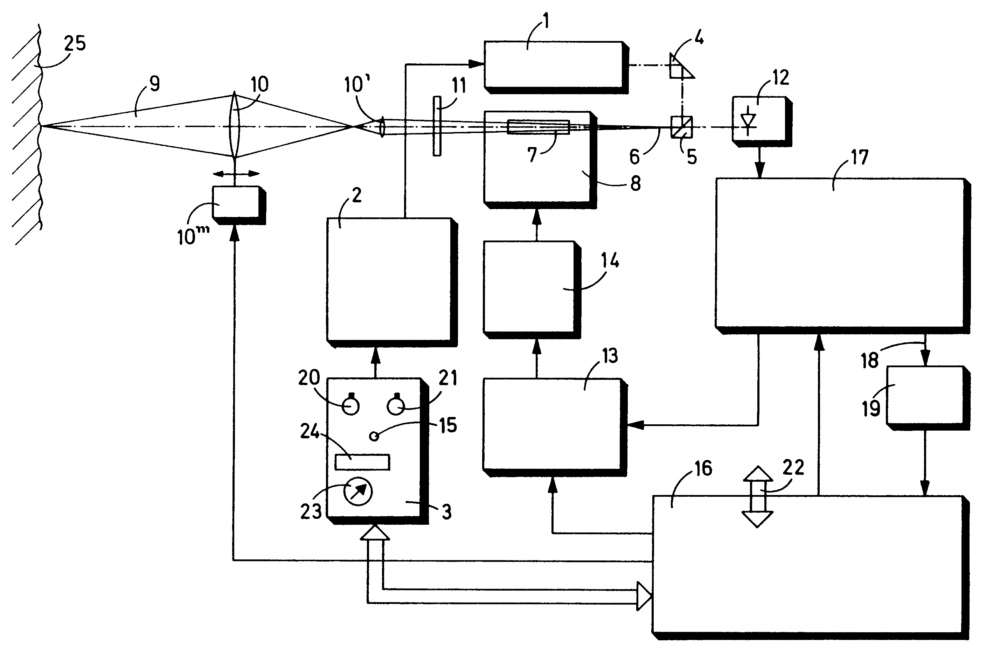

Die Erfindung wird nachfolgend anhand eines in der Zeichnung schematisch dargestellten Ausführungsbeispieles näher beschrieben. Es zeigt die Fig. ein Schema eines elektrooptischen Distanzmessgerätes zur Verwendung beim erfindungsgemässen Verfahren.

Ein He-Ne-Laser 1 gemäss Fig. wird von einer Stromversorgungsstufe 2 gespeist, welche von einem Bedienpult 3 gesteuert wird. Der Strahl des Lasers 1 gelangt über ein Umlenkprisma 4 auf einen polarisierenden Strahlenteiler 5, an dem er linear polarisiert wird. Der linear polarisierte Strahl 6 durchsetzt dann einen elektrooptischen Modulatorkristall 7, der sich im Hohlraumresonator eines Modulators 8 befindet. Der in seiner elliptischen Polarisation modulierte Laserstrahl 9 gelangt über eine Optik 10, 10' auf die Messstrecke, deren Länge gemessen werden soll und typisch zwischen einigen m und einigen km liegt.

Die Optik umfasst zwei Glieder 10, 10', von denen das Glied 10 zur Fokussierung längs der optischen Achse über eine Antriebseinheit 10''' verschieblich ist. Der in der Optik 10, 10' aufgeweitete Laserstrahl 9 wird beim Betrieb des Distanzmessgerätes auf einen Zielgegenstand 25 fokussiert. Als Einstellkriterium dient die Modulation von am Zielgegenstand 25 reflektierten Strahlanteilen, welche von einem Photoempfänger 12 aufgenommen werden, wie nachfolgend näher beschrieben. Am Zielgegenstand 25 reflektierte Strahlanteile des modulierten Laserstrahles 9 gelangen also über die Optik 10, 10' zum Modulatorkristall 7 zurück. Auf seinem Weg vom Modulatorkristall 7 zur Optik 10 und zurück durchläuft der Laserstrahl 9 zweimal eine Viertelwellenplatte 11. Ohne die Wirkung des Modulators 8 weist deshalb der zurückkehrende linear polarisierte Laserstrahl 6 gegenüber dem ausgesendeten Strahl eine 90 Grad gedrehte Polarisationsebene auf, sodass er den polarisierenden Strahlenteiler 5 geradlinig durchläuft und auf den Photoempfänger 12 trifft.

Der Modulatorkristall 7 ist ein Lithium-Niobat-Kristall, der von einer Mikrowellenquelle 13 über einen Treiber-Verstärker 14 mit einem Modulationssignal variabler und einstellbarer Frequenz beaufschlagt wird. Hat das periodische Modulationssignal z.B. eine Frequenz von 500 MHz, so läuft nach je 2 ns eine Modulationswelle von 60 cm Länge auf die Messstrecke. Beträgt die doppelte Länge der Messstrecke gerade ein ganzzahliges Vielfaches der Modulationswellenlänge 60 cm, so haben am messstreckenseitigen Ende des Modulationskristalles 7 der auslaufende und der zurückkehrende Laserstrahl 9 zu jedem Zeitpunkt die gleichen Modulationszustände. Der rückkehrende Strahl wird dann vom Kristall 7 gerade vollständig demoduliert und erhält seine lineare Polarisation zurück, wegen der Lambda/4-Platte 11 allerdings mit um 90 Grad gedrehter Polarisationsebene, sodass am Photoempfänger 12 ein Helligkeitsmaximum auftritt. Weil die Modulationswirkung insbesondere beim verwendeten $LiNbO_3$-Kristall stark temperaturabhängig ist, sind beim Messgerät Modulation und Demodulation an ein und demselben Kristall 7 im sog. "round-trip-mode" vorgesehen, wobei infolge der Lambda/4-Platte 11 eine Polarisationsdrehung erfolgt, damit sich temperaturbedingte statische Doppelbrechungseffekte zu jedem Zeitpunkt kompensieren. Verändert man die Frequenz an der Mikrowellenquelle 13, so ist das Verhältnis von doppelter Messstreckenlänge zu Modulationswellenlänge nicht mehr ganzzahlig, und die Helligkeit am Photoempfänger 12 zeigt einen charakteristischen periodischen Verlauf mit Maxima und ausgeprägten Minima.

Beim weiter unten genauer beschriebenen Messablauf wird nach Auslösung mittels einer Start-Taste 15 am Bedienpult 3 durch eine Steuerstufe 16 an der Mikrowellenquelle 13 eine Folge steigender oder fallender Frequenzen nacheinander eingestellt. Mittels eines Steuersignales aus einer Synchronisierstufe 17 wird jeder eingestellten Frequenz noch eine Frequenzmodulation (Wobble) im 1 kHz-Rhythmus mit einem Frequenzschub von +/- 100 kHz aufgeprägt. Auf diese Weise wertet man den genannten charakteristischen Signalverlauf am Photoempfänger 12 durch Abtasten in zwei frequenzbenachbarten Detektionskanälen I und II mit der Synchronisierstufe 17 aus. Dabei ist die Steuerstufe 16 so programmiert, dass durch zeitliche Mittelung der den jeweiligen Minima entsprechenden Frequenzen atmosphärische Schwankungen des optischen Messweges ausgeglichen werden.

Beim oben erwähnten Fall, dass die doppelte Länge der Messstrecke gerade ein ganzzahliges Vielfaches der Modulationswellenlänge ist, beträgt die Laufzeit 2T des Lichtes vom Modulator 7 bis zum Reflektor 25 und zurück gerade ein ganzzahliges Vielfaches Gamma der Modulationsperiode t = 2 ns, also 2T = Gamma . t. Dabei ist aber der Zahlenwert von Gamma noch unbekannt. Diese Mehrdeutigkeit wird in an sich bekannter Weise dadurch behoben, dass man für zwei oder mehrere aufeinanderfolgende Minima des Signalverlaufes am Photoempfänger 12 die Modulationsfrequenz, bzw. Modulationsperioden t bestimmt. Trat für das Vielfache Gamma das Minimum bei der Modulationsperiode t Gamma auf und für das n.-te darauffolgende Vielfache (Gamma + n) bei der Modulationsperiode t (Gamma + n), so ist in jedem Fall die Laufzeit 2T = Gamma . t Gamma = (Gamma + n) . t (Gamma + n).

Daraus erhält man das gesuchte Vielfache Gamma = t (Gamma + n) / (t Gamma - t (Gamma + n)), die Laufzeit T = (1/2) . Gamma . t und die Messstrecke L = c . T, wobei die Lichtgeschwindigkeit c in bekannter Weise von Druck, Temperatur und Feuchte der Luft abhängt.

Die Auswertung des Ausgangssignales des Photoempfängers 12 erfolgt wie bereits erwähnt, mittels der Synchronstufe 17 und der Steuerstufe 16. Dabei tastet ein in der Stufe 17 vorgesehener Synchrondetektor synchron mit dem Steuersignal für die Frequenzmodulation der Mikrowellenquelle 13 das Signal des Empfängers 12 immer dann ab, wenn die gewobbelte Modulationsfrequenz für den Modulator 8 ihre relativen Maxima (Kanal II) und Minima (Kanal I) erreicht. Bis zum Eintreffen der jeweils folgenden Abtastwerte hält der Synchrondetektor die Werte in den Kanälen I und II. Durch Differenzbildung zwischen den Kanälen I und II und Ausmittelung der Differenz erhält man ein Analogsignal, dessen Vorzeichen die Ablage des Signals des Empfängers 12 vom Minimum angibt. Dieses Analogsignal gelangt auf einer Leitung 18 auf einen Analog-Digitalwandler 19, der es in ein digitales 8-Bit-Signal wandelt und der Steuerstufe 16 zuführt. Die Steuerstufe 16 dient zur programmierten Steuerung der Frequenzen der Mikrowellenquelle 13, zur Ermittlung der oben beschriebenen charakteristischen Modulationsperioden t (Gamma + n) aus dem digitalen 8-Bit-Signal vom A/D-Wandler 19, zur Ausgabe der Messergebnisse und zur Steuerung des Frequenzhubs über die Synchronstufe 17 und die Mikrowellenquelle 13.

Am Bedienpult 3 sind andererseits noch Schalter 20 und 21 zur manuellen Auswahl von Betriebsarten über die Steuerstufe 16 vorhanden. Mit dem Schalter 20 kann man den oben beschriebenen Frequenzhub wählen. Der Schalter 21 hat die Stellungen AUS, FERN, MESS, BATTERIE-TEST. Bei der Stellung FERN ist der Messablauf, sowie die Ausgabe der Ergebnisse extern über einen ASB ("american standard code for information interchange single line bus") 22 steuerbar, bei der Stellung BATTERIE-TEST kann man die Spannung der Batterie für die Stromversorgung des Distanzmessgerätes an einem Instrument 23 ablesen. Bei Stellung MESS dient das Instrument 23 der Anzeige der Stärke des Signals des Empfängers 12. Eine digitale Anzeige 24 dient der Anzeige der gemessenen Distanzen.

Unter Beachtung der oben beschriebenen Prinzipien lassen sich viele Ausführungsformen realisieren, ohne den Rahmen der Patentansprüche zu verlassen. Je nach Leistung der verwendeten Strahlungsquelle 1 bedarf der Zielgegenstand 25 für kleinere Messdistanzen keiner besonderen Markierungen oder Reflexverstärker. Gute Messergebnisse erzielt man, wenn der Zielgegenstand in an sich bekannter Art mit einer Vielzahl reflektierender Elemente versehen wird, welche als kleine Glaskugeln auf einer Reflexfolie angeordnet sein können. Kombiniert man das Distanzmessgerät mit einem Theodoliten zu einem Tachymeter, so kann man anstelle einer separaten Fokussieroptik 10, 10' das Theodolit-Fernrohr zur Fokussierung benutzen, wenn man den Distanz-Messstrahlengang vor dem Fokussierglied einspiegelt. Weiterhin ist es möglich, Interferenzen zwischen vom Zielgegenstand zurückkehrenden Strahlanteilen und Störreflexen vom Sender 1 auf dem Photoempfänger 12 als Einstellkriterium für die Fokussierung zu verwenden, weil dieselben nur im fokussierten Strahlengang auftreten Eine weitere Art des Einstellkriteriums für die Fokussierung besteht in einer Änderung der Modulationsfrequenz. Durch das abwechselnde Durchlaufen von Minima und Maxima des Lichtpegels auf der Detektionsdiode 12 entsteht ein periodisch schwankendes Signal, dessen Amplitude bei der optimalen Fokussierung maximal groß wird. Für den Lichtwandler 12 eignen sich empfindliche Systeme mit geringer Frequenzbandbreite, wie PIN-Dioden, Sekundärelektronenvervielfacher, Avalanche-Photodioden. Insbesondere bei Zielgegenständen 25, deren Oberfläche an verschiedenen Stellen die Polarisation des Messstrahles unterschiedlich verändert, bietet der kleine Messfleck infolge der erfindungsgemässen Fokussierung den Vorteil, dass die Polarisation der empfangenen Strahlanteile höchstens eine einheitliche Aenderung erfährt, jedoch nicht viele unterschiedliche Aenderungen aufweist, wobei kein Minimum mehr ausmessbar wäre.

**Patentansprüche**

1. Verfahren zur elektrooptischen Distanzmessung unter Verwendung eines Distanzmessgerätes, in welchem ein elektromagnetischer Strahl (6) erzeugt, mittels eines elektrooptischen Modulators (8) ein erstes Mal moduliert und auf einen Zielgegenstand (25) gerichtet wird und mit welchem am Zielgegenstand reflektierte Strahlanteile aufgenommen, erneut moduliert und in ihrer Stärke gemessen werden, dadurch gekennzeichnet, dass der modulierte elektromagnetische Strahl (9) auf den Zielgegenstand (25) fokussiert wird.

2. Verfahren nach Anspruch 1, dadurch gekennzeichnet, dass der Zielgegenstand (25) im Auftreffbereich des elektromagnetischen Strahles (9) mit einer Vielzahl reflektierender Elemente versehen wird.

3. Verfahren nach Anspruch 2, dadurch gekennzeichnet, dass die Vielzahl reflektierender Elemente aus einer Vielzahl kleiner Glaskugeln auf einer Reflexfolie besteht.

4. Verfahren nach Anspruch 1, dadurch gekennzeichnet, dass der Modulator (8) einen elektrooptischen Kristall (7) umfasst, mit dem die Polarisation des elektromagnetischen Strahles (6) moduliert wird.

**5.** Verfahren nach Anspruch 4, dadurch gekennzeichnet, dass der elektromagnetische Strahl (6) kohärent ist und das erste und zweite Mal mit demselben elektrooptischen Kristall (7) moduliert wird.

**6.** Verfahren nach Anspruch 5, dadurch gekennzeichnet, dass der kohärente elektromagnetische Strahl linear polarisiert und nacheinander durch einen polarisierenden Strahlenteiler (5) den elektrooptischen Kristall (7), eine an die Wellenlänge des Strahles angepasste Viertelwellenplatte (11) den Zielgegenstand (25) und erneut durch die Viertelwellenplatte (11), den elektrooptischen Kristall (7) und den polarisierenden Strahlenteiler (5) auf einen Strahlendetektor (12) geführt wird.

**7.** Verfahren nach Anspruch 6, dadurch gekennzeichnet, dass als Kriterium für die Fokussierung des elektromagnetischen Strahles (9) auf den Zielgegenstand (25) ein Auftreten von Interferenzen zwischen den am Zielgegenstand reflektierten und im Distanzmessgerät gestreuten Strahlanteilen auf dem Strahlendetektor (12) verwendet wird.

**8.** Verfahren nach Anspruch 6, dadurch gekennzeichnet, dass der elektromagnetische Strahl (6) mit einer sich ändernden Frequenz moduliert wird und dass als Kriterium für die Strahlfokussierung den Frequenzänderungen entsprechende Aenderungen der am Zielgegenstand (25) reflektierten Strahlanteile auf dem Strahlendetektor (12) verwendet werden.

**Claims**

**1.** Method for the electro-optical distance measurement with the use of distance-measuring instrument, in which an electromagnetic beam (6) is produced, modulated a first time by means of an electro-optical modulator (6) and directed onto an object article (25) and by which beam components reflected at the object article are received, modulated anew and measured in their intensity, characterised thereby, that the modulated electromagnetic beam (9) is focussed onto the object article (25).

**2.** Method according to claim 1, characterised thereby, that the object article (25) is provided with a plurality of reflecting elements in the region of incidence of the electromagnetic beam (9).

**3.** Method according to claim 2, characterised thereby, that the plurality of reflecting elements consists of a plurality of small glass balls on a reflective foil.

**4.** Method according to claim 1, characterised thereby, that the modulator (8) comprises an electro-optical crystal (7), by which the polarisation of the electromagnetic beam (6) is modulated.

**5.** Method according to claim 4, characterised thereby, that the electromagnetic beam (6) is coherent and modulated the first and the second time by the same electro-optical crystal (7).

**6.** Method according to claim 5, characterised thereby, that the coherent electromagnetic beam is linearly polarised and led through in succession a polarising beam splitter (5), the electro-optical crystal (7), a quarter-wave plate (11) matched to the wavelength of the beam, the object article (25) and anew through the quarter-wave plate (11), the electro-optical crystal (7) and the polarising beam splitter (5) onto a beam detector (12).

**7.** Method according to claim 6, characterised thereby, that an occurrence of interferences between the beam components reflected at the object article (25) and the beam components diffused in the distance-measuring instrument on the beam detector (12) is used as criterion for the focussing of the electromagnetic beam (9) onto the object article.

**8.** Method according to claim 6, characterised thereby, that the electromagnetic beam (6) is modulated at a varying frequency and that changes, which correspond to the changes in frequency, of the beam components reflected at the object article (25) on the beam detector (12) are used as criterion for the focussing of the beam.

**Revendications**

**1.** Méthode de mesure électro-optique de distances utilisant un appareil de mesure de distances dans lequel un rayon électromagnétique (6) est créé, modulé une première fois à l'aide d'un modulateur électro-optique (8), dirigé sur un objet cible (25) et grâce auquel les réflexions du rayon sont recueillies sur l'objet cible, à nouveau modulées et mesurées du point de vue de leur intensité, caractérisée par le fait que le rayon électromagnétique modulé (9) est mis au point sur l'objet cible (25).

2. Méthode conforme au point 1, caractérisée par le fait que l'objet cible (25) est doté de plusieurs éléments réfléchissants dans la zone d'incidence du rayon électromagnétique (9).

3. Méthode conforme au point 2, caractérisée par le fait que les nombreux éléments réfléchissants se composent d'une multiplicité de petites boules en verre placées sur une feuille réfléchissante.

4. Méthode conforme au point 1, caractérisée par le fait que le modulateur (8) comporte un cristal électro-optique (7) qui permet de moduler la polarisation du rayon électromagnétique (6).

5. Méthode conforme au point 4, caractérisée par le fait que le rayon électromagnétique (6) est cohérent et qu'il est modulé la première comme la seconde fois à l'aide du même cristal électro-optique (7).

6. Méthode conforme au point 5, caractérisée par le fait que le rayon électromagnétique cohérent est polarisé linéairement et amené sur un détecteur de rayons (12) en passant successivement par une lame séparatrice polarisante (5), le cristal électro-optique (7), une lame quart d'onde (11) adaptée à la longeur d'onde du rayon, l'objet cible (25) et à nouveau par la lame quart d'onde (11), le cristal électro-optique (7) et la lame séparatrice polarisante (5).

7. Méthode conforme au point 6, caractérisée par le fait que les phénomènes d'interférences survenant sur le détecteur de rayons (12) entre les parties du rayon réfléchies sur l'objet cible et celles diffusées dans l'appareil de mesure de distances sont le critère utilisé pour mettre au point le rayon électromagnétique (9) sur l'objet cible (25).

8. Méthode conforme au point 6, caractérisée par le fait que le rayon électromagnétique (6) est modulé par une fréquence variable et que les modifications sur le détecteur de rayon (12) correspondant aux changements de fréquence et concernant les parties réfléchies du rayon sur l'objet cible (25) sont le critère utilisé pour la mise au point du rayon.